# EUROPÄISCHE PATENTSCHRIFT

(11) **EP 0 801 248 B1**
(45) Veröffentlichungstag und Bekanntmachung des Hinweises auf die Patenterteilung: **21.11.2001**
(21) Anmeldenummer: 97103495.4
(22) Anmeldetag: 04.03.1997
(51) Int. Cl.: F16F 7/10

(54) **Befestigungsvorrichtung**
Fixing arrangement
Dispositif d'arrêt

(30) Priorität: 22.03.1996 DE 29605393 U
(43) Veröffentlichungstag der Anmeldung: 15.10.1997
(73) Patentinhaber: Aeroquip, Zweigniederlassung der Trinova GmbH, D-76532 Baden-Baden (DE)
(72) Erfinder: Huck, Michael, 77815 Bühl (DE)
(74) Vertreter: Gleiss, Alf-Olav, Dr.jur. Dipl.-Ing.

(56) Entgegenhaltungen:
- EP-A- 0 500 329
- CH-A- 548 548
- DE-A- 2 729 717
- FR-A- 953 575
- FR-A- 1 111 742
- FR-A- 2 710 381
- US-A- 4 043 432
- PATENT ABSTRACTS OF JAPAN vol. 011, no. 344 (M-640), 11. November 1987 & JP 62 124335 A (BRIDGESTONE CORP), 5. Juni 1987
- PATENT ABSTRACTS OF JAPAN vol. 016, no. 090 (M-1218), 5. März 1992 & JP 03 272308 A (TAISEI PLUS KK), 4. Dezember 1991

## Beschreibung

Die Erfindung betrifft eine Vorrichtung zur Befestigung eines auf eine Schlauchleitung aufgebrachten Schwingungstilgers.

In der Fahrzeugtechnik ist es bekannt, daß Motoren Schwingungen unterschiedlichster Frequenzen erzeugen, die beispielsweise über den am Motor befestigten Kältemittelkompressor und die Klimasaugleitung auf die Karosserie übertragen werden. Die auf die Karosserie übertragenen Schwingungen führen dann häufig zu Dröhngeräuschen in der Fahrgastzelle, die von den Fahrzeuginsassen als unangenehm und störend empfunden werden.

Zur Beseitigung solcher Dröhngeräusche setzt man sogenannte Schwingungstilger ein, die beispielsweise auf eine Klimasaugleitung aufgebracht sind und durch ihre Masse in der Lage sind, die auftretenden Schwingungen zu reduzieren beziehungsweise vollständig zu beseitigen.

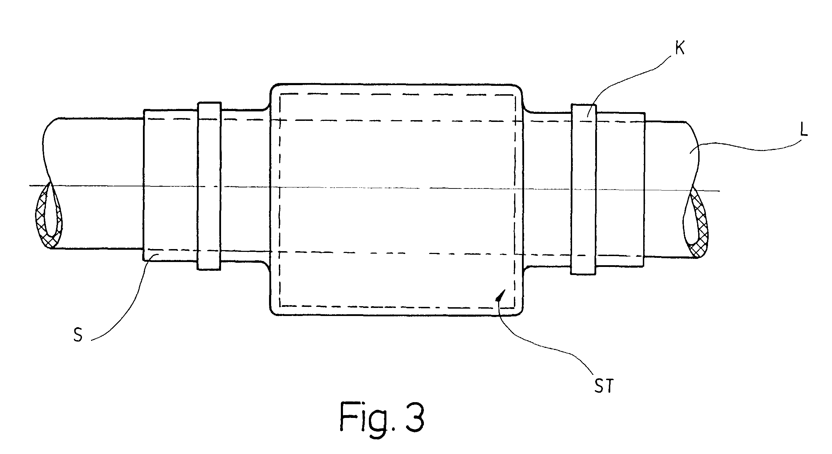

Befestigt werden derartige Schwingungstilger in der in Figur 3 beispielhaft gezeigten Weise. Zunächst wird der Schwingungstilger ST auf die Schlauchleitung L aufgeschoben. Anschließend wird ein Schrumpfschlauch S über den Schwingungstilger gezogen und geschrumpft, so daß sich die in Figur 3 gezeigte Form ausbildet. Damit ist der Schwingungstilger ST am Schlauch L festgelegt. Um ein Verrutschen des Schwingungstilgers auf der Leitung L zu verhindern, wird der Schrumpfschlauch S an seinen beiden Enden mit Kabelbindern K zusätzlich fixiert.

Diese Art der Befestigung hat jedoch den Nachteil, daß einerseits mehrere Einzelteile notwendig sind, die andererseits zu einer aufwendigen und zeitaufwendigen Montage führen.

Die Aufgabe der Erfindung besteht deshalb darin, eine Befestigungsvorrichtung für Schwingungstilger anzugeben, die möglichst wenig Bauteile umfaßt und in kurzer Zeit und in einfacher Weise montierbar ist. Im übrigen soll sie auch kostengünstig sein.

Diese Aufgabe wird durch eine Befestigungsvorrichtung mit den Merkmalen des Anspruchs 1 gelöst. Dadurch, daß die Befestigungsvorrichtung aus nur einer Hülse besteht, auf die der Schwingungstilger aufgeschoben wird, gestaltet sich die Montage sehr einfach und ist folglich auch in einer sehr kurzen Montagezeit durchführbar. Darüber hinaus ist eine solche Hülse sehr kostengünstig. Durch Ausbilden eines Hülsenabschnitts mit veränderbarem Durchmesser wird erreicht, daß der Schwingungstilger ein Festklemmen der Hülse an der Schlauchleitung bewirkt.

Als vorteilhaft hat sich herausgestellt, in Längsrichtung verlaufende Schlitze in die Hülse einzubringen, die zu einem Ende hin randoffen sind. Damit läßt sich die radiale Elastizität eines Hülsenabschnitts erhöhen, so daß der Schwingungstilger in einfacher Weise aufgeschoben werden kann.

Vorzugsweise sind vier parallel zueinander verlaufende Schlitze vorgesehen, die vorzugsweise auch gleichmäßig beabstandet zueinander liegen. Eine Erhöhung der Elastizität, das heißt des Maßes der Durchmesserveränderbarkeit, erzielen vorzugsweise zum Ende hin sich verbreiternde Schlitze, die vorzugsweise am gegenüberliegenden Ende in kreisförmige Ausnehmungen münden.

Vorzugsweise ist das elastische Ende der Hülse mit einer in Umfangsrichtung sich erstreckenden Raste versehen, die ein Heruntergleiten des Schwingungstilger von der Hülse verhindert.

Vorzugsweise ist der am der Raste gegenüberliegenden Ende der Hülse eine in Umfangsrichtung sich erstreckende Stufe ausgebildet, die als Anschlagsfläche für den Schwingungstilger dient.

In einer bevorzugten Ausführungsform ist an die Stufe ein Arm angebracht, der den Schwingungstilger übergreift und somit eine zusätzliche Sicherung, insbesondere eine Verdrehsicherung bietet.

Die Erfindung wird nun anhand eines Ausführungsbeispiels mit Bezug auf die Zeichnungen näher erläutert. Dabei zeigen:
- Figur 1: eine schematische Darstellung einer Befestigungsvorrichtung mit Schwingungstilger in Längsansicht und im Querschnitt,
- Figur 2: eine schematische Darstellung der Befestigungsvorrichtung in Seitenansicht, im Längsschnitt und im Querschnitt und
- Figur 3: eine schematische Darstellung einer Befestigungsvorrichtung nach dem Stand der Technik.

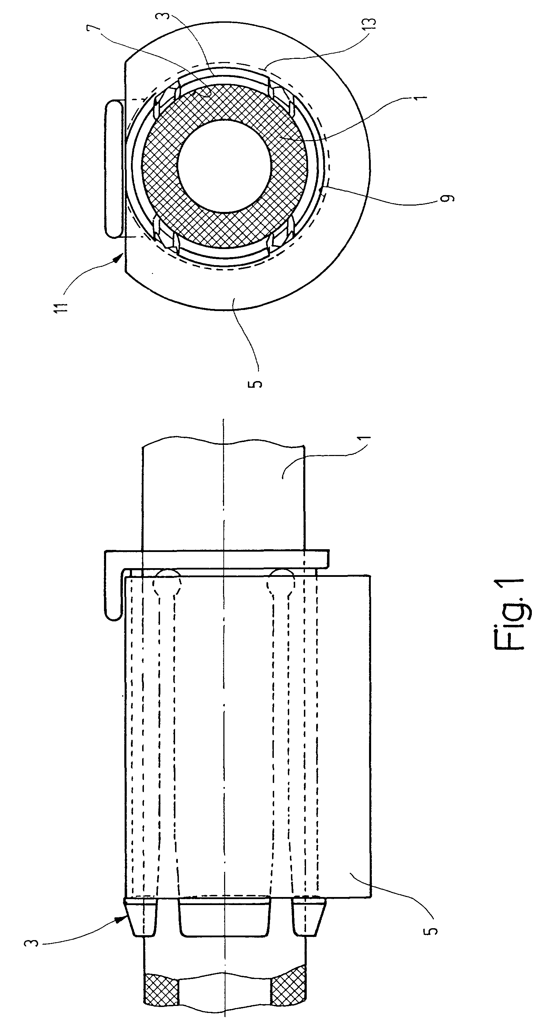

In Figur 1 ist eine Schlauchleitung 1 zu sehen, die Teil einer Klimasaugleitung ist und mit einem am Motor befestigten Kältemittelkompressor in Verbindung steht. Auf diese Schlauchleitung 1 ist eine vorzugsweise aus Kunststoff bestehende Hülse 3 aufgeschoben.

Auf dieser Hülse wiederum sitzt ein Schwingungstilger 5, der vorzugsweise aus Metall besteht und ein Gewicht von zumindest 450 g besitzt. Dieser Schwingungstilger 5 dient dazu, die vom Motor erzeugten Schwingungen, die über die Schlauchleitung 1 übertragen werden, zu dämpfen.

Aus dem in Figur 1 zusätzlich gezeigten Querschnitt geht hervor, daß die Hülse 3 einen kreisförmigen Querschnitt aufweist und mit ihrer Innenwandung 7 bündig an der Außenfläche der Schlauchleitung 1 anliegt. Auch der Schwingungstilger 5 weist einen ringförmigen Querschnitt auf, mit einer Innenwandung 9, die bündig an einer Außenfläche der Hülse 3 anliegt. Allerdings weist der Schwingungstilger 5 eine im Querschnitt deutlich zu erkennende Abflachung 11 auf.

Die im Querschnitt zu sehende gestrichelte Linie 13 soll andeuten, daß der Außendurchmesser der Hülse 3 zumindest in einem Längsabschnitt größer ist als der Innendurchmesser des Schwingungstilger 5.

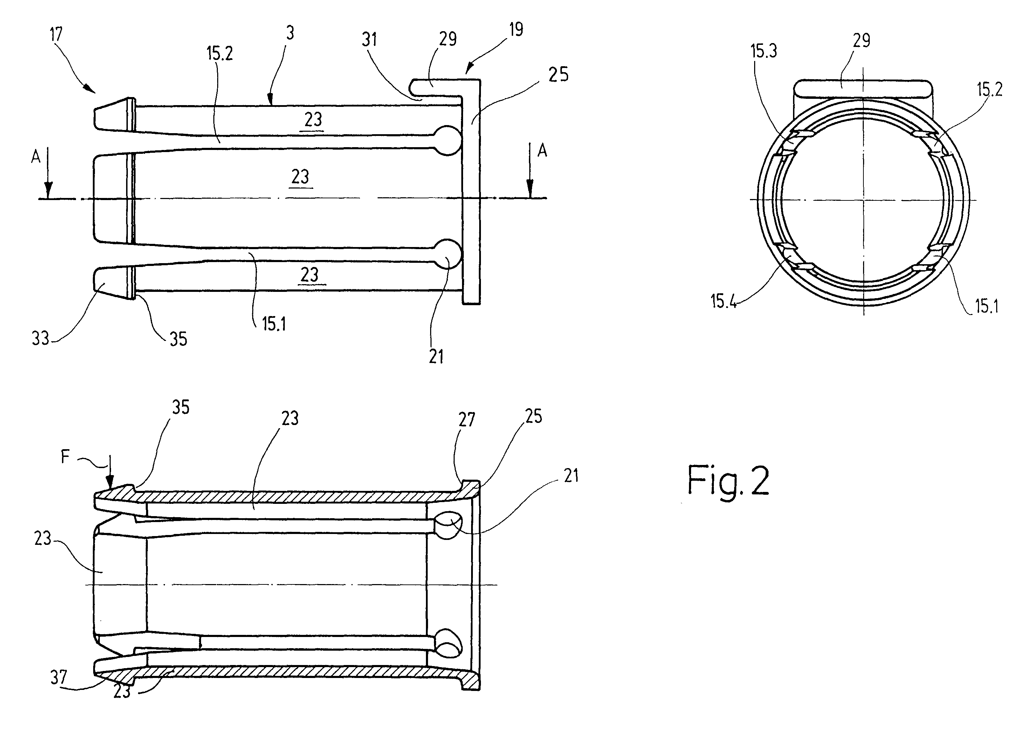

Der genauere Aufbau der Hülse 3 wird nun mit Bezug auf die Figur 2 erläutert.

Die längliche Hülse 3 weist in Längsrichtung verlaufende Schlitze 15 auf, die an einem Ende 17 der Hülse 3 randoffen sind. Am anderen Ende 19 der Hülse 3 münden die Schlitze 15 jeweils in eine kreisförmige Ausnehmung 21, deren Durchmesser größer ist als die Breite der Schlitze 15. Die Figur 2 läßt noch erkennen, daß sich die Schlitze 15 zum Ende 17 hin verbreitern.

Aus dem in Figur 2 gezeigten Querschnitt der Hülse 3 geht hervor, daß insgesamt vier Schlitze 15 vorgesehen sind. Somit bilden die Schlitze aus der Wandung der Hülse 3 vier Zungen 23 aus, die im Bereich des Endes 19 miteinander verbunden sind. Durch Einsatz eines elastischen Kunststoffmaterials erreicht man damit, daß der Durchmesser der Hülse 3 im Bereich des Endes 17 veränderbar ist, sofern eine radial wirkende Kraft auf die Zungen 23 einwirkt. So bewirkt beispielsweise eine in Pfeilrichtung F wirkende Kraft, daß die entsprechende Zunge 23 nach innen gedrückt wird. Dies läßt sich dazu nutzen, die Hülse 3 an der Schlauchleitung 1 zu fixieren, indem die Zungen 23 als Klemmvorrichtung dienen. Die zum Klemmen notwendige Kraft wird dabei vom Schwingungstilger 5 aufgebracht.

Die zur Auslenkung der Zungen 23 notwendige Kraft hängt dabei im wesentlichen von den Abmessungen der Zunge, deren Material und der Breite der Schlitze ab.

Im Bereich des Endes 19 ist sowohl in der Längsansicht als auch im Längsschnitt ein Ring 25 zu erkennen, dessen äußerer Durchmesser etwas größer ist als der Durchmesser der Hülse 3 im mittleren Bereich, so daß eine Stufe 27 ausgebildet wird. Diese Stufe 27 dient als Anschlagfläche beziehungsweise rechte Begrenzungsfläche für den aufgeschobenen Schwingungstilger. An dieser Stelle soll noch darauf hingewiesen werden, daß eine Veränderung des Durchmessers im Bereich des Endes 19 nicht möglich ist.

Im oberen Bereich des Rings 25 ist ein sich in Längsrichtung erstreckender Arm 29 angeordnet. Aus dem Querschnitt geht hervor, daß der Arm 29 eine Breite aufweist, die annähernd dem Innendurchmesser der Hülse 3 entspricht. Insbesondere ist die der Hülse zugewandte Fläche derart ausgebildet, daß sie möglichst plan auf der Abflachung 11 des Schwingungstilgers liegen kann. Das bedeutet, daß zwischen der Außenfläche der Hülse 3 und der Innenfläche des Arms 29 ein Spalt vorhanden sein muß, der zumindest der Wanddicke des Schwingungstilgers in diesem Bereich entspricht. Neben einer weiteren Klemmwirkung auf den Schwingungstilger 5 hat der Arm 29 die weitere Aufgabe, ein Verdrehen des Schwingungstilgers zu verhindern.

Am gegenüberliegenden Ende 17 ist ebenfalls ein in Umfangsrichtung sich erstreckender Ring 33 vorgesehen, der auch eine zur Hülsenmitte hin zeigende Stufe 35 bildet. Im Längsschnitt ist zu erkennen, daß eine äußere Umfangsfläche 37 der Stufe 33 gegenüber der Längsachse geneigt ist, so daß der randnahe Durchmesser des Rings 33 geringer ist als der -in Längsrichtung gesehen- weiter innen im Bereich der Stufe 35 liegende Durchmesser. Durch diese besondere Ausgestaltung des Rings 33 wird eine Raste ausgebildet, die ein Herausrutschen des Schwingungstilgers 5, das heißt ein Verschieben nach links, verhindert.

Mit Hilfe der geneigten Flächen 37 ist es jedoch möglich, den Schwingungstilger 5 auf die Hülse 3 aufzuschieben, wobei dann die Zungen 23 nach innen gedrückt werden. Dafür ist es jedoch notwendig, daß der Außendurchmesser des Rings 33 am Ende 17 etwas geringer ist als der Innendurchmesser des Schwingungstilgers 5.

Sobald der Schwingungstilger 5 vollständig aufgeschoben ist, wird die Raste 33 freigegeben, so daß die Zungen 23 sich nach außen verlagern. In diesem Zustand wirkt dann die Stufe 35 als Anschlags- beziehungsweise Begrenzungsfläche.

Um eine gute Fixierung des Schwingungstilgers 5 auf der Hülse 3 zu erreichen, ist -wie bereits erwähnt- der Außendurchmesser der Hülse 3 etwas größer als der Innendurchmesser des Schwingungstilgers 5, so daß eine Klemmwirkung zwischen beiden Elementen auftritt. Gleichzeitig werden die Zungen 23 zumindest im Bereich des Endes 17 dadurch etwas nach innen gedrückt, so daß sie auch eine Klemmwirkung mit der Schlauchleitung 1 herbeiführen. Damit ist eine sehr gute Fixierung erreicht.

Neben der in den Figuren dargestellten Ausführungsform gibt es eine Vielzahl weiterer möglicher Ausgestaltungen, die ebenfalls die Aufgabe der Erfindung lösen.

So ist es beispielsweise denkbar, den Schwingungstilger ohne die Abflachung 11 rohrförmig auszubilden. Dann allerdings kann der Arm 29 nicht mehr als Verdrehsicherung dienen. Folglich ist es durchaus möglich, auf diesen Arm 29 vollständig zu verzichten.

## Patentansprüche

1. Vorrichtung zur Befestigung eines auf einer Schlauchleitung (1) aufgebrachten Schwingungstilgers (5) **dadurch gekennzeichnet, daß** eine auf die Schlauchleitung (1) aufschiebbare längliche Hülse (3) vorgesehen ist, die zumindest einen Endbereich (17) mit veränderbarem Durchmesser aufweist und deren Außendurchmesser im gegenüberliegenden Endbereich (19) größer ist als der Innendurchmesser des Schwingungstilgers (5).

2. Vorrichtung nach Anspruch 1, **dadurch gekennzeichnet, daß** in der Hülse zumindest ein zum einen Ende (17) hin randoffener in Längsrichtung verlaufender Schlitz (15) vorgesehen ist, der die radiale Elastizität in diesem Bereich erhöht.

3. Vorrichtung nach Anspruch 2, **dadurch gekennzeichnet, daß** vier parallel und in gleichen Abständen zueinander verlaufende Schlitze (15) vorgesehen sind, die vier elastische Zungen (23) ausbilden.

4. Vorrichtung nach Anspruch 2 oder 3, **dadurch gekennzeichnet, daß** der Schlitz (15) sich zum einen Ende (17) hin verbreitert.

5. Vorrichtung nach einem der Ansprüche 2 bis 4, **dadurch gekennzeichnet, daß** der Schlitz (15) im Bereich des zweiten Endes (19) in eine kreisförmige Ausnehmung (21) mündet.

6. Vorrichtung nach einem der vorhergehenden Ansprüche, **dadurch gekennzeichnet, daß** im Bereich des einen Endes (17) eine Rastvorrichtung (33) vorgesehen ist, die den aufgebrachten Schwingungstilger (5) in Längsrichtung fixiert.

7. Vorrichtung nach einem der vorhergehenden Ansprüche, **dadurch gekennzeichnet, daß** im Bereich des anderen Endes (19) eine in Umfangsrichtung verlaufende Stufe (25) ausgebildet ist, die als Anschlag für den Schwingungstilger (5) dient.

8. Vorrichtung nach Anspruch 7, **dadurch gekennzeichnet, daß** die Stufe (25) einen Arm (29) aufweist, der sich parallel zur Längsachse der Hülse erstreckt und den aufgebrachten Schwingungstilger (5) übergreift.

## Claims

1. Device for fastening a vibration absorber (5) attached to a hose line (1), **characterized in that** there is provided an elongate sleeve (3) which is capable of being pushed onto the hose line (1) and has at least one end region (17) of variable diameter and of which the outside diameter in the opposite end region (19) is larger than the inside diameter of the vibration absorber (5).

2. Device according to Claim 1, **characterized in that** there is provided in the sleeve at least one slot (15) which is open-edged towards one end (17) and runs in the longitudinal direction and which increases the radial elasticity in this region.

3. Device according to Claim 2, **characterized in that** four slots (15) which run parallel to and at equal distances from one another and form four elastic tongues (23) are provided.

4. Device according to Claim 2 or 3, **characterized in that** the slot (15) widens towards one end (17).

5. Device according to one of Claims 2 to 4, **characterized in that** the slot (15) issues into a circular recess (21) in the region of the second end (19).

6. Device according to one of the preceding claims, **characterized in that** there is provided in the region of one end (17) a latching device (33) which fixes the attached vibration absorber (5) in the longitudinal direction.

7. Device according to one of the preceding claims, **characterized in that** a step (25) which runs in the circumferential direction and serves as an abutment for the vibration absorber (5) is formed in the region of the other end (19).

8. Device according to Claim 7, **characterized in that** the step (25) has an arm (29) which extends parallel to the longitudinal axis of the sleeve and engages over the attached vibration absorber (5).

## Revendications

1. Dispositif pour fixer une amortisseur d'oscillations (5) monté sur un tuyau (1), **caractérisé en ce qu'**il est prévu une douille allongée (3), qui peut être emmanchée sur le tuyau (1) et possède au moins une partie d'extrémité (17) possédant un diamètre modifiable et dont le diamètre extérieur dans la partie d'extrémité opposée (19) est supérieure au diamètre intérieur de l'amortisseur d'oscillations (5).

2. Dispositif selon la revendication 1, **caractérisé en ce que** dans la douille est prévue au moins une fente (15), dont le bord est ouvert en direction d'une extrémité (17) et qui s'étend dans la direction longitudinale et augmente l'élasticité radiale dans cette zone.

3. Dispositif selon la revendication 2, **caractérisé en ce qu'**il est prévu quatre fentes parallèles (15), qui sont séparées par des distances identiques et quatre languettes élastiques (23).

4. Dispositif selon la revendication 2 ou 3, **caractérisé en ce que** la fente (15) s'élargit en direction d'une extrémité (17).

5. Dispositif selon l'une des revendications 2 à 4, **caractérisé en ce que** la fente (15) débouche dans la zone de la seconde extrémité (19) dans un évidement de forme circulaire (21).

6. Dispositif selon l'une des revendications précédentes, **caractérisé en ce que** dans la zone d'une extrémité (17) est prévue un dispositif d'encliquetage (33) qui fixe dans la direction longitudinale l'amortisseur d'oscillations installé (5).

7. Dispositif selon l'une des revendications précédentes, **caractérisé en ce qu'**au niveau de l'autre extrémité (19) est formée une partie étagée (25), qui s'étend dans la direction circonférentielle et est utilisée en tant que butée pour l'amortisseur de vibrations (5).

8. Dispositif selon la revendication 7, **caractérisé en ce que** la partie étagée (25) possède un bras (29) qui s'étend parallèlement à l'axe longitudinal de la douille et s'engage au-dessus de l'amortisseur d'oscillations installé (5).
